# EUROPEAN PATENT APPLICATION

(11) **EP 1 347 455 A2**
(43) Date of publication of application: **24.09.2003**
(21) Application number: 03002827.8
(22) Date of filing: 07.02.2003
(51) Int. Cl.: G11B 27/28

(54) **Contents recording/playback apparatus and contents edit method**

(30) Priority: 19.03.2002 JP 2002076940
(71) Applicant: Kabushiki Kaisha Toshiba, Tokyo (JP)
(72) Inventor: Togashi, Yuuichi, 1-chome, Minato-ku, Tokyo 105-8001 (JP); Ogi, Kouchi, 1-chome, Minato-ku, Tokyo 105-8001 (JP)
(74) Representative: Henkel, Feiler, Hänzel

(57) **Abstract**

A contents recording/playback apparatus records and plays back contents data. The contents recording/playback apparatus includes a control button (131) configured to issue an insert instruction of contents data to be inserted into contents data whose recording or playback is in progress, and a data editing unit (111, 119) configured to insert contents data, which is prepared in advance in the apparatus as the contents data to be inserted, in a current recording or playback position of the contents data whose recording or playback is in progress, when the control button (131) is operated while the recording or playback of the contents data is in progress.

## Description

The present invention relates to a contents recording/playback apparatus which can record and play back contents data such as image data, audio data, and the like, and a contents edit method used in that contents recording/playback apparatus.

In recent years, various systems for recording/playing back contents data such as image data, audio data, and the like have been developed. For example, Jpn. Pat. Appln. KOKAI Publication No. 2000-236496 discloses an apparatus having a function of managing title names of contents such as recorded video programs. This apparatus generates and manages the title names of contents, using additional information such as an EPG (Electronic Program Guide) and the like.

Jpn. Pat. Appln. KOKAI Publication No. 2002-44594 discloses a contents edit apparatus, which is used to edit a plurality of types of contents, such as a moving image, still image, and the like on an edit window using a computer. This contents edit apparatus simultaneously displays a plurality of types of contents such as a moving image, still image, text, and the like on the edit window of the computer. The user designates edit positions of respective contents on the edit window, and can edit these contents.

However, portable contents recording/playback apparatuses such as PDAs (Personal Digital Assistants), video cameras, and the like do not have any large-scale display screens which can simultaneously display a plurality of contents, and it is difficult to designate edit positions of respective contents on the edit window. Hence, a mechanism that allows the user to easily edit recorded contents is demanded for such portable contents recording/playback apparatuses.

It is preferable if one can manage contents such as recorded moving image data/audio data, and the like by appending some comments to them. However, a portable contents recording/playback apparatus does not normally have an input device such as a keyboard or the like, and even when such apparatus has some input device, it is not easy for the user to make input operation using such an input device. For this reason, the portable contents recording/playback apparatus is required to have an edit function that can easily manage recorded contents without any user's input operations required to create comment messages and the like.

Embodiments of the present invention provide a contents recording/playback apparatus and a contents edit method, which can efficiently edit contents data without display of any edit window or user operation to create comment messages and the like.

According to an embodiment of the invention, there is provided a contents recording/playback apparatus capable of recording and playback of contents data, the apparatus comprising: a control button configured to issue an insert instruction of contents data to be inserted into contents data whose recording or playback is in progress; and a data editing unit configured to insert contents data, which is prepared in advance in the apparatus as the contents data to be inserted, in a current recording or playback position of the contents data whose recording or playback is in progress, when the control button is operated while the recording or playback of the contents data is in progress.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a perspective view showing the outer appearance of a portable contents recording/playback apparatus according to an embodiment of the present invention;
FIG. 2 is a block diagram showing the system arrangement of the portable contents recording/playback apparatus of the embodiment shown in FIG. 1;
FIG. 3 is a view for explaining a title insert function in the portable contents recording/playback apparatus of the embodiment shown in FIG. 1;
FIG. 4 is a flow chart showing the sequence of the title insert process in the portable contents recording/playback apparatus of the embodiment shown in FIG. 1;
FIG. 5 shows the title insert process when title images are physically inserted in moving image contents in the portable contents recording/playback apparatus of the embodiment shown in FIG. 1;
FIG. 6 shows the title insert process when title images are logically inserted in moving image contents in the portable contents recording/playback apparatus of the embodiment shown in FIG. 1;
FIG. 7 is a flow chart showing the processing sequence executed upon playing back moving image contents inserted with title images in the portable contents recording/playback apparatus of the embodiment shown in FIG. 1;
FIG. 8 is a view for explaining a simultaneous recording & playback function in the portable contents recording/playback apparatus of the embodiment shown in FIG. 1;
FIG. 9 shows an example of link information which is used to link audio and image data used in the portable contents recording/playback apparatus of the embodiment shown in FIG. 1;
FIG. 10 is a flow chart showing the sequence of audio recording and photographing processes in the portable contents recording/playback apparatus of the embodiment shown in FIG. 1;
FIG. 11 is a flow chart showing the sequence of the audio playback process in the portable contents recording/playback apparatus of the embodiment shown in FIG. 1;
FIG. 12 is a view for explaining a table of contents (TOC) create function in the portable contents recording/playback apparatus of the embodiment shown in FIG. 1;
FIG. 13 shows an example of link information which is used to link contents data and menu used in the portable contents recording/playback apparatus of the embodiment shown in FIG. 1;
FIG. 14 is a flow chart showing the sequence of the table of contents playback process in the portable contents recording/playback apparatus of the embodiment shown in FIG. 1; and
FIG. 15 is a flow chart showing the sequence for playing back contents using a table of contents in the portable contents recording/playback apparatus of the embodiment shown in FIG. 1.

Embodiments of the present invention will be described below.

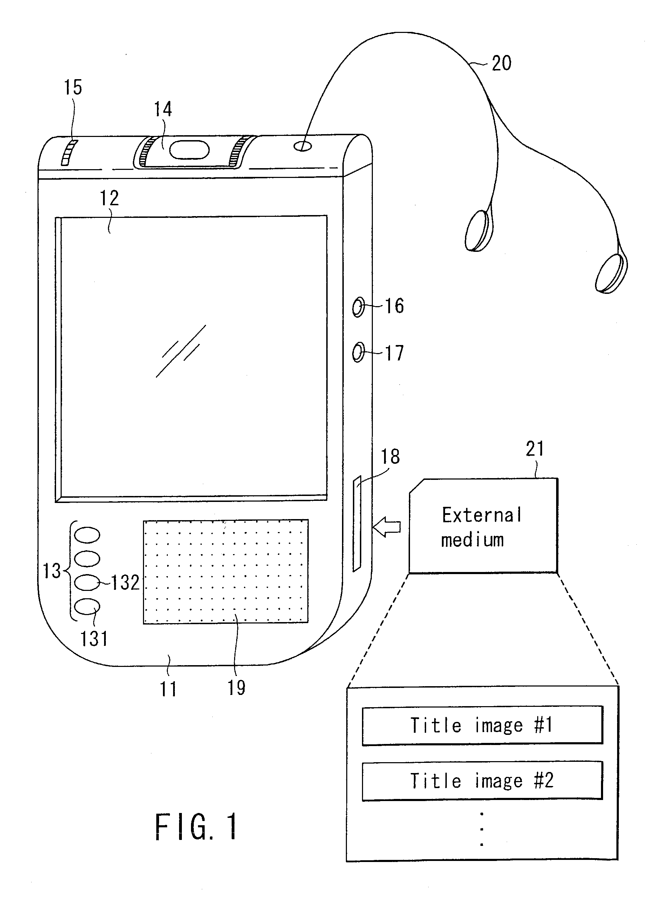

FIG. 1 shows the outer appearance of a portable contents recording/playback apparatus according to an embodiment of the present invention. This portable contents recording/playback apparatus 11 is realized by a portable electronic device such as a PDA, portable mobile phone, movie/voice recorder, or the like, and can operate by a built-in battery. FIG. 1 exemplifies a portable contents recording/playback apparatus realized as a PDA with a camera, and its arrangement will be described below.

As shown in FIG. 1, a display 12, control buttons 13, and loudspeaker 19 are arranged on the front surface of the main body of the portable contents recording/playback apparatus 11. A camera unit 14 is arranged on the top surface of the main body to be pivotable to face forwards or backwards.

The camera unit 14 is a imaging device, and can take still and moving images. Image contents data of the taken still or moving image is displayed on the display 12, and is recorded on a storage medium in the portable contents recording/playback apparatus 11. The image contents data recorded on the storage medium is played back as needed, and is displayed on the display 12.

A microphone 15 is also provided to the top surface of the main body of the portable contents recording/playback apparatus 11. Audio/voice data input via the microphone 15 is recorded on the storage medium in the portable contents recording/playback apparatus 11.

An audio input terminal 16, video input terminal 17, and card slot 18 are provided to the side surface of the main body of the portable contents recording/playback apparatus 11. Using the audio input terminal 16 and video input terminal 17, audio and image contents data can be input from an external AV apparatus or the like, and can be recorded on the storage medium in the portable contents recording/playback apparatus 11.

The card slot 18 can detachably receive an external storage medium 21 such as a memory card or the like.

The portable contents recording/playback apparatus 11 has a function of recording and playing back audio and image contents data, and also a function of editing such audio and image contents data.

This edit function is used to manage contents data stored in the portable contents recording/playback apparatus 11. This edit function can implement a process for combining given contents data with other contents data as index information, a process for generating index information using data extracted from given contents data, and the like. More specifically, the edit function includes the following functions
(1) a title insert function of inserting a title as audio or image data in an arbitrary position of audio or image contents data, whose recording or playback is in progress;
(2) a simultaneous recording & playback function of recording image contents data such as a still image, moving image, or the like during recording or playback of audio contents data, and playing back the image contents data recorded, along the progress of playback of the audio contents data; and
(3) a table of contents (TOC) create function of automatically creating a table of contents menu by extracting titles (telops) from moving image contents data which is being recorded or has already been recorded.

The title insert function (1) inserts other audio or image contents data into given audio or image contents data during recording or playback of that contents data.

Note that "insert" does not mean a process for superimposing a comment message (sub-picture) on a frame of given image contents, but means a process for inserting other image between frames of image contents or inserting other music contents between frames of music contents.

For example, the title insert function is used to insert a title image into moving image contents data as a kind of index information during recording or playback of the moving image contents data. As a title image, a moving or still image prepared in advance by the user in the external storage medium 21 is used.

The control buttons 13 include an insert button 131 and photograph button 132 in addition to, e.g., a power button, record/play button, and the like.

The insert button 131 is used to instruct insertion of other contents data into contents data whose recording or playback is in progress. For example, when the user has pressed the insert button 131 during, e.g., the imaging and recording processes of moving image contents data using the camera unit 14, a title image stored in the external storage medium 21 is automatically inserted at the current recording position of the moving image contents data, the recording of which is underway. When a plurality of title images are stored in the external storage medium 21, for example, a process for automatically switching a title image used every time the insert button 131 is pressed is executed.

The simultaneous recording & playback function (2) is used to display a still or moving image as index information along the progress of playback of music contents data. As index information, a still or moving image taken by the camera unit 14 is used.

When the user takes a still or moving image using the camera unit 14 during recording or playback of music contents data, link data between the music contents data whose recording or playback is in progress, and the taken image data, is automatically generated.

The table of contents creation function (3) automatically generates a table of contents window (table of contents menu) including keywords (keyword titles), from moving image contents data using character images contained in that moving image contents data.

This function can automatically create a table of contents by extracting titles (telops) from recorded contents. The user can quickly play back a scene he or she wants to watch merely by selecting a keyword on the automatically generated table of contents window, without having to create indexes by himself or herself.

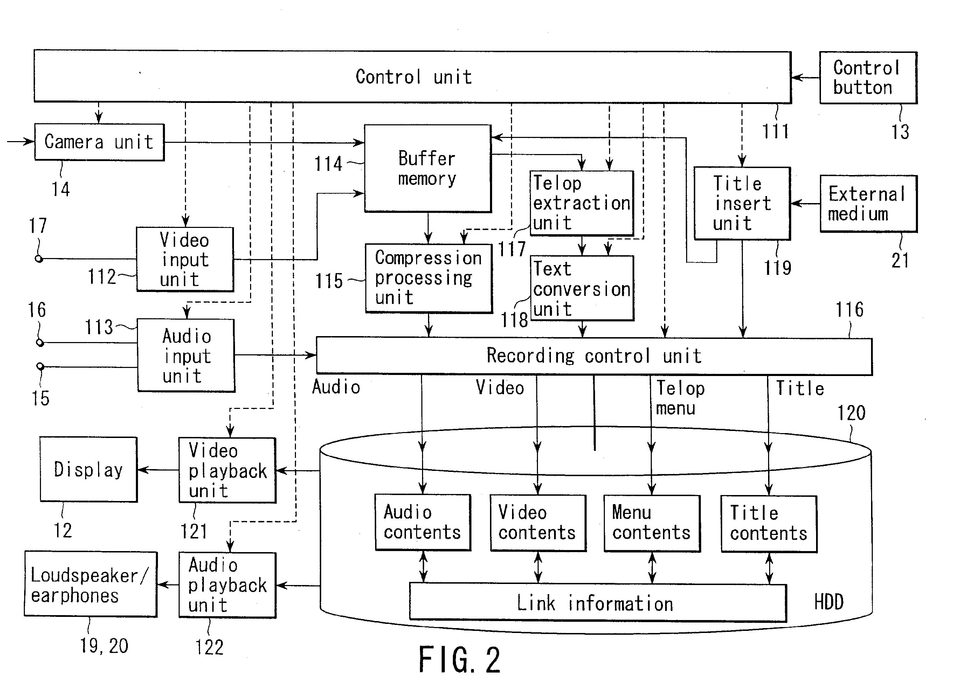

The system arrangement of the portable contents recording/playback apparatus 11 of this embodiment will be described below with reference to FIG. 2.

As shown in FIG. 2, the portable contents recording/playback apparatus 11 comprises a control unit 111, video input unit 112, audio input unit 113, buffer memory 114, compression processing unit 115, recording control unit 116, telop extraction unit 117, text conversion unit 118, storage medium 120 (HDD or the like), video playback unit 121, audio playback unit 122, and the like, in addition to the aforementioned display 12, control buttons 13, camera unit 14, microphone 15, audio input terminal 16, video input terminal 17, card slot 18, loudspeaker 19, earphones 20, and the like.

The control unit 111 is a processor for controlling the operation of the portable contents recording/playback apparatus 11. The control unit 111 controls to record and play back audio and image contents data and to take a still or moving image using the camera unit 14 in accordance with user's operations of the control buttons 13.

The camera unit 14 comprises an image sensing device such as a CCD or the like, and a signal processing circuit. The camera unit 14 executes an imaging operation (photographing operation), and image data of a still or moving image obtained by the imaging operation is input to the buffer memory 114. The image data input to the buffer memory 114 is compression-encoded by the compression processing unit 115, and the compressed data is recorded as video contents data of the still or moving image in the HDD 120 via the recording control unit 116.

When image data of a still or moving image input from an external AV apparatus is to be recorded, that image data is input to the buffer memory 114 via the video input terminal 17 and video input unit 112.

Upon recording audio contents data, audio data input from an external AV apparatus via the audio input terminal 16 or audio data input via the microphone 15 is sent to the recording control unit 116 via the audio input unit 113, and is recorded as audio contents in the HDD 120.

The image contents data and audio contents data, which are recorded as audio and video contents in the HDD 120, are respectively played back by the video playback unit 121 and audio playback unit 122. This playback process is executed according to link information recorded in the HDD 120 under the control of the control unit 111. The link information links contents data with each other, and is used to implement the aforementioned edit functions.

A title insert unit 119 inserts a title image stored in the external storage medium 21 into moving image contents data whose recording or playback is underway. As the insert method, 1) a method of physically inserting a title image into moving image contents data, and 2) a method of logically inserting a title image using link information are available. In either case, a title image is inserted between two consecutive frames of the moving image contents data.

When a title image is to be physically inserted during recording of moving image contents data, a title image stored in the external storage medium 21 is sent to the buffer memory 114, and is physically inserted in the moving image contents data as image data for a predetermined number of frames between the current and next frame positions of the moving image contents data.

For logical insertion, a title image stored in the external storage medium 21 is sent to the recording control unit 116, and is recorded in the HDD as title contents together with link information with the moving image contents data. This link information is used to link that moving image contents data and title contents. The link information contains insert position information indicating frames of the moving image contents data, between which the title contents is to be inserted. The insert position information indicates the current frame number corresponding to the current recording or playback position of the moving image data upon depression of the insert button 131, and the next frame number.

The telop extraction unit 117 and text conversion unit 118 are provided to implement the aforementioned table of contents creation function. The telop extraction unit 117 analyzes moving image contents data input to the buffer memory 114 to detect frames that include character images (telops), and extracts the character images from the detected frames. The text conversion unit 118 converts each extracted character image into text data by character recognition. The control unit 111 generates a table of contents window based on the converted text data and the position information of the detected frames, and records it as menu contents in the HDD 120 via the recording control unit 116.

The respective edit functions will be explained in detail below.

### <Title Insertion>

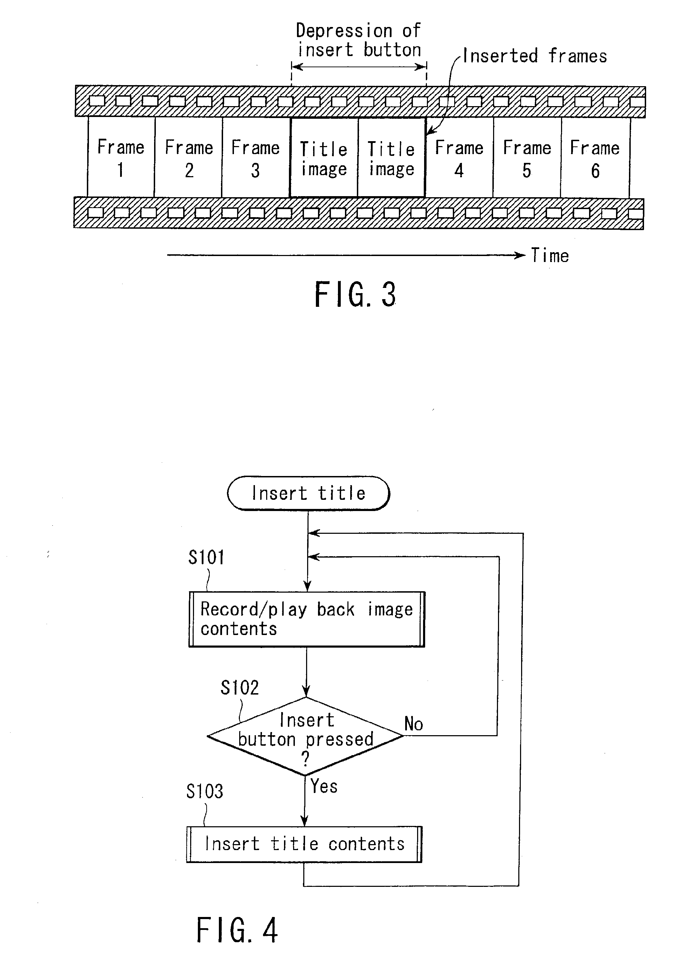

The title insert function will be explained below with reference to FIGS. 3 to 7.

When the user has pressed the insert button 131 during, e.g., recording of moving image contents data, a title image, which is prepared in advance, is inserted into the moving image contents data, which is being recorded, for a time period in which the insert button 131 is held down. Of course, a title image may be inserted into moving image contents data for a predetermined number of frames in response to depression of the insert button 131.

FIG. 3 shows a case wherein the current frame number of moving image contents which is being recorded upon depression of the insert button 131 is "3", and a title image is inserted between that frame 3 and the next frame 4 for a playback time of two frames.

A plurality of types of title images may be prepared in advance, and a title image may be selectively inserted for each scene of a moving image. In this manner, upon playing back a moving image, different title images can be displayed for respective scenes to be played back. Hence, the user can easily recognize the contents data, playback of which is in progress, without inputting any comment messages or the like.

Likewise, other audio data, which is prepared in advance, can be inserted as a voice index into audio data during recording of that audio data.

A practical process upon, e.g., inserting a title image into moving image contents will be explained below.

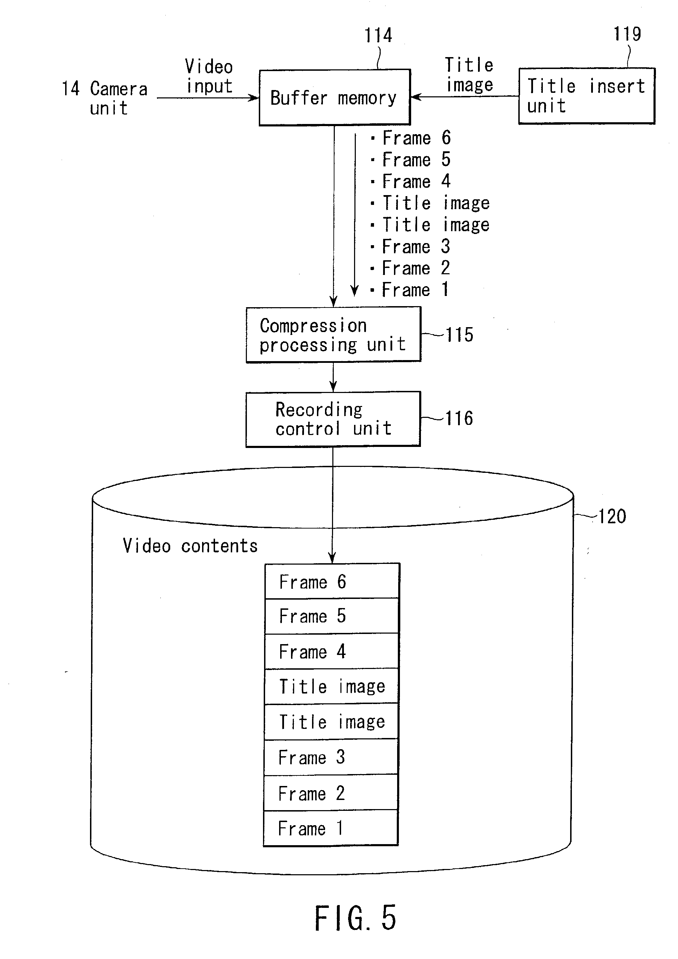

Title insertion is done in the sequence shown in the flow chart in FIG. 4. More specifically, a recording or playback process of moving image contents is executed (step S101). During recording or playback of the moving image contents, the control unit 111 monitors if the user has pressed the insert button 131 (step S102). If the control unit 111 detects that the user has pressed the insert button 131 (YES in step S102), a process for inserting a title image at the current recording or playback position of the moving image contents is executed while continuing the recording or playback process of that moving image contents (step S103). FIG. 5 shows the title image insert process.

FIG. 5 shows a case wherein a title image is physically inserted into a stream of moving image contents. In this case, the title insert unit 119 inputs a title image to the image buffer memory 114 as two frame data between the current frame 3 and next frame 4 of the moving image contents data. The buffer memory 114 sends to the compression processing unit 115, image data in the order of frame 1, frame 2, and frame 3 of the moving image contents, title image, title image, and frame 4, frame 5, and frame 6 of the moving image contents.

The compression processing unit 115 executes a compression encoding process using a motion compensation technique such as MPEG2, MPEG4, or the like. In this compression encoding process, inter encoding or intra encoding is executed while executing a motion estimation process in the input order of moving image data. The stream of the moving image contents data in which the title image has been inserted in this way undergoes a compression process by the compression processing unit 115, thus generating compression-encoded video contents data, which includes frames in the order of frame 1, frame 2, frame 3, title image, title image, frame 4, frame 5, frame 6, ..., frame N. Then, the generated video contents data is recorded in the HDD 120.

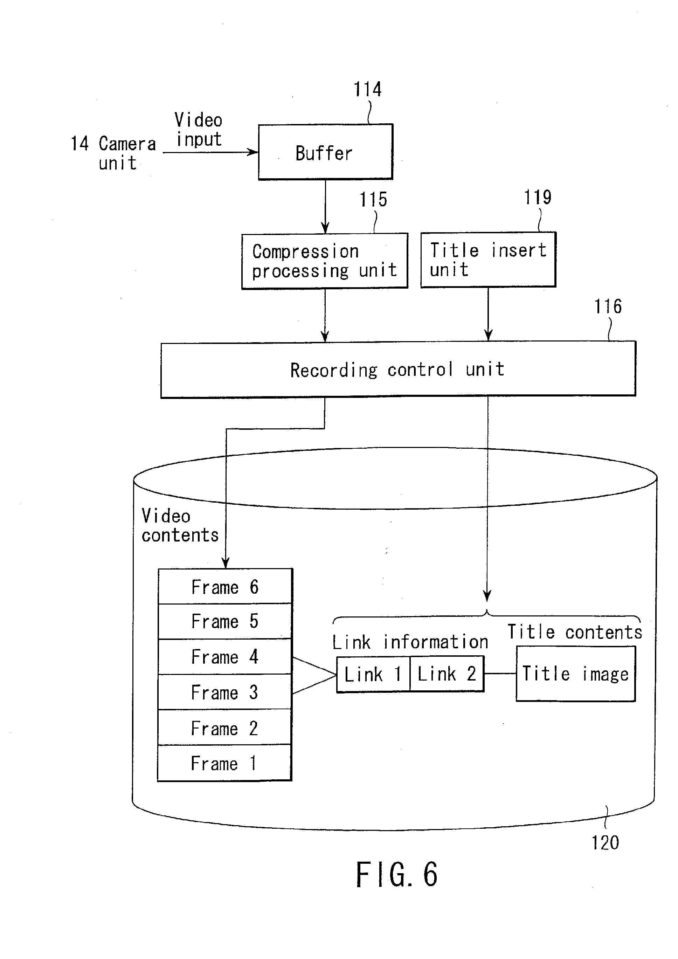

FIG. 6 shows a case wherein a title image is logically inserted into a stream of moving image contents. In this case, a title image to be inserted, which is output from the title insert unit 119, is recorded in the HDD 120 together with link information. The link information contains first link information (link 1) which indicates, as insert position information, the current frame number (frame 3) and next frame number (frame 4) of the moving image contents data upon depression of the insert button 131, and second link information (link 2) that links the moving image contents data and the title image. Link information 2 also contains playback time period information indicating the playback time period (the number of frames) of the title image.

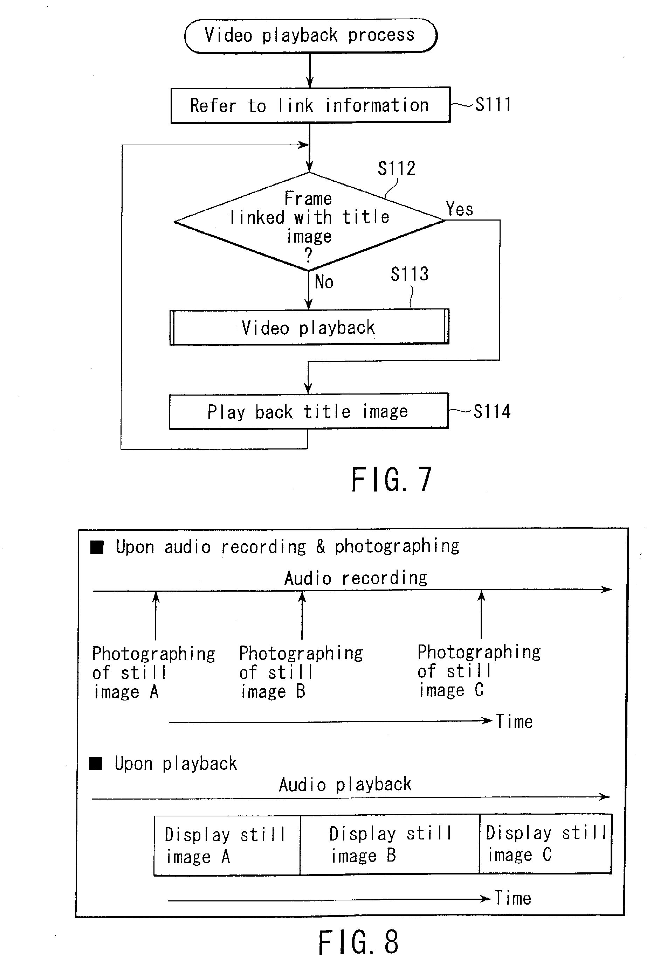

In this manner, the title image is recorded in the HDD 120 in correspondence with the insert position information indicating frames 3 and 4, and the moving image contents data, which is being recorded. In this case, the playback process of the recorded moving image contents data is executed in the sequence shown in the flow chart of FIG. 7.

The control unit 111 refers to link information corresponding to moving image contents data to be played back (step S111), and selectively executes a video playback process for playing back the moving image contents data (step S113) and a title image playback process (step 3114) while checking for each frame if a title image is to be inserted at the current frame position (step S112).

The moving image contents data is played back from frames 1 to 3, the title image is played back for the subsequent playback time for two frames, and the moving image contents data is then played back from frame 4. In this manner, the title image is played back between playback frames 3 and 4 of the moving image contents data, which are designated by the insert position information. Note that the number of frames used to play back and display the title image is given by the aforementioned playback time period information. When a moving image is used as the title image, or other audio data is inserted into audio data, the aforementioned playback time period information may be not required.

### <Simultaneous Recording & Playback Function of Audio and Image>

The simultaneous recording & playback function of audio and image data will be explained below with reference to FIGS. 8 to 11.

Assume that the user takes a still image using the camera unit 14 during recording of audio contents data. FIG. 8 shows a case wherein the user took three still images A, B, and C during audio recording.

Each of Still images A, B, and C is recorded together with link information which indicates an audio recording elapsed time upon taking each still image. Upon playing back the recorded audio contents data, still images A, B, and C are played back and displayed at timings indicated by their link information, so that still images A, B, and C are sequentially played back and displayed in the order named along the progress of audio playback.

Also, when the user takes a still image during playback of audio contents data, each still image is recorded together with link information indicating an elapsed time from the beginning of playback of the audio contents, thus linking each still image and music contents.

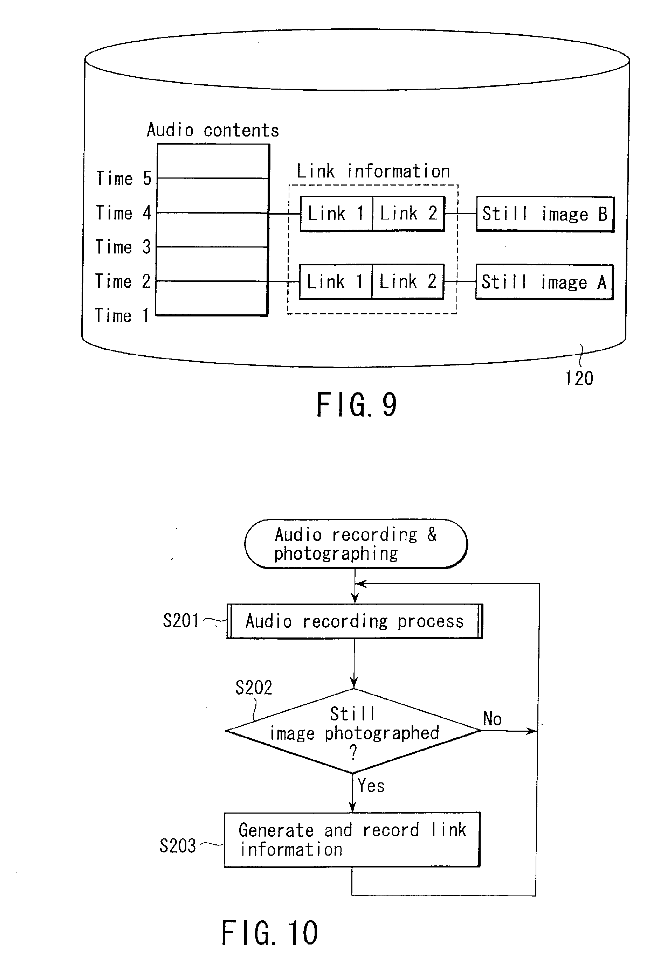

FIG. 9 shows an example of link information which is used to link each still image and audio contents data (audio contents). For example, upon linking two still images A and B to audio contents data, link information corresponding to each of these still images A and B is generated. The link information corresponding to still image A contains link 1 which indicates an elapsed time (time 2) from the beginning of playback or recording of audio contents data, and link 2 that links the audio contents data and still image A, and the link information corresponding to still image B contains link 1 which indicates an elapsed time (time 4) from the beginning of playback or recording of audio contents data, and link 2 that links the audio contents data and still image B.

FIG. 10 shows the recording processing sequence of audio contents data. A process for recording audio contents data input via the microphone 15 or audio input terminal 15 is executed (step S201). The control unit 111 monitors if the user has pressed the photograph button 132 during audio recording. Every time the user has pressed the photograph button 132, a still image photographing process is executed. Upon execution of the still image photographing process (YES in step S202), link information that contains an elapsed time from the beginning of recording of audio contents data is generated, and is recorded together with the still image obtained by the still image photographing process (step S203).

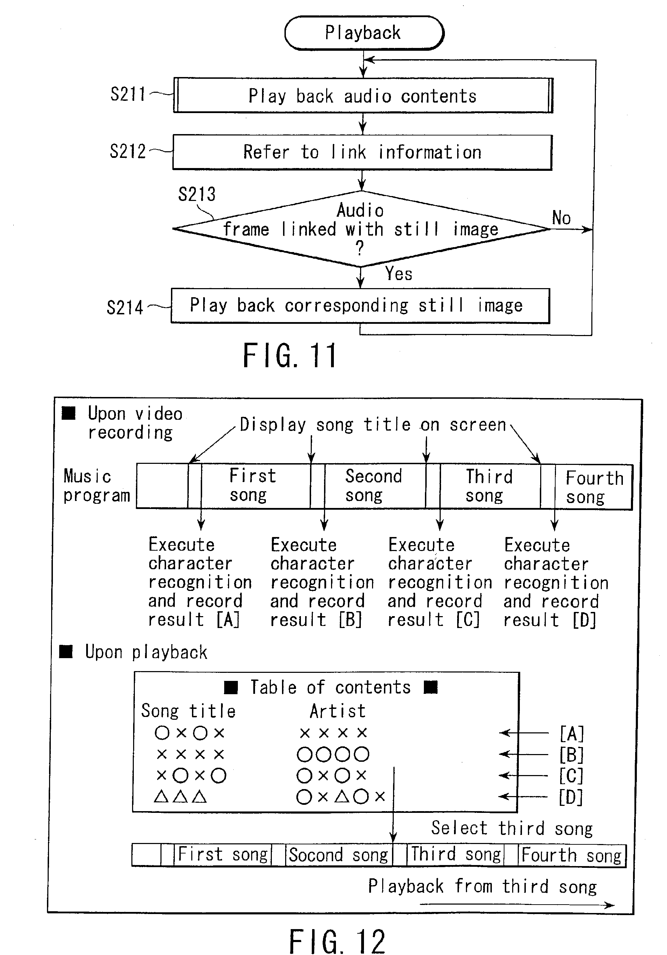

FIG. 11 shows the playback process sequence of the recorded audio contents data. An audio contents data playback process starts (step S211). During the audio contents data playback process, it is checked based on the link information corresponding to that audio contents data and an elapsed time from the beginning of playback of the audio contents data if the current playback position of the audio contents data is a playback position (audio frame) where a still image is to be played back (steps S212 and S213). The still image is played back and displayed on the display 12 at the timing indicated by the link information (step S214).

Note that not only still or moving image obtained by the photographing process but also contents data that contains text data such as lyrics or the like can be recorded in correspondence with audio data which is being recorded, by instructing to record such contents data from the corresponding control button 13.

### <Table of Contents Creation>

The table of contents creation process will be described below with reference to FIGS. 12 to 15. A case will be explained below wherein a TV program such as a music program or the like, which is input from a TV tuner or the like, is recorded. In this case, the TV program includes moving image contents data and audio contents data, and the moving image contents data and the audio contents data are synchronously recorded.

In a music program, a song title and artist name are normally superimposed on the moving image contents data of the music program. Upon playback, when a signer sings a song, a song title and artist name are displayed as a telop on the screen at the beginning of that song.

As shown in FIG. 12, a song title and artist name, included in the moving image contents data, are extracted by the telop extraction unit 117, and undergo character recognition by the text conversion unit 118, thus creating a table of contents window that contains the song names and artist names obtained by the text conversion unit 118 as keywords.

Upon playback, the user selects a keyword of a song to be played back from the table of contents window, thus easily selecting a desired song.

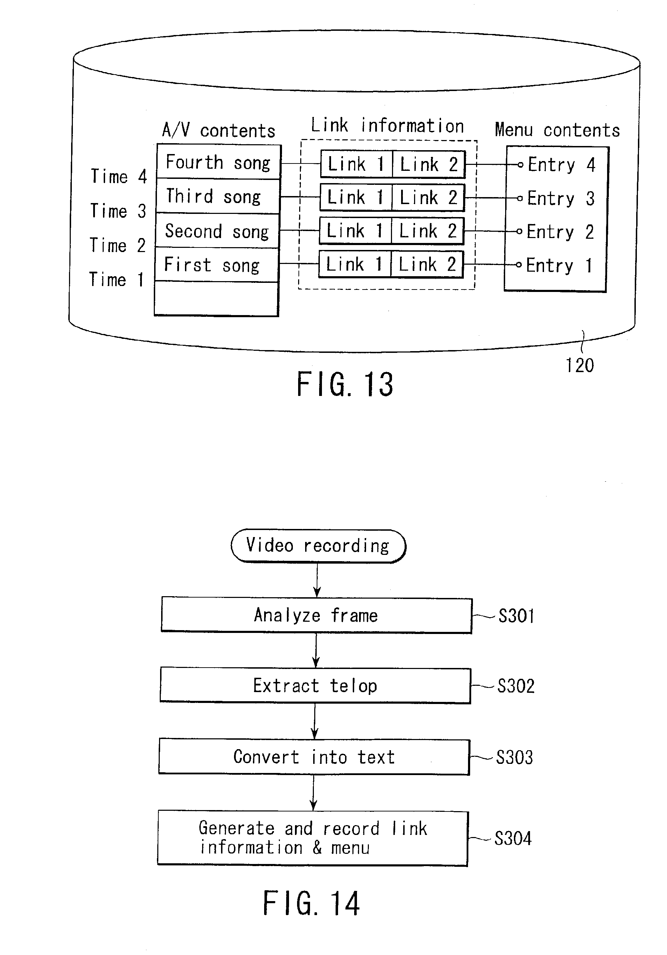

The created table of contents window is recorded as menu contents in the HDD 120. In this case, the menu contents link to A/V contents which contain moving image and audio contents data that configure the music program. FIG. 13 shows an example of this link information.

This link information links the menu contents and corresponding A/V contents, and link information which contains link 1 that indicates the frame number of moving image contents data which forms the A/V contents, and link 2 that indicates a corresponding entry (keywords such as a song title, artist name, and the like) on the menu contents is generated for each entry (keywords such as a song title, artist name, and the like) on the table of contents window which forms the menu contents. FIG. 14 is a flow chart showing the sequence of the table of contents creation process executed upon recording moving image contents data.

Moving image contents data input on the buffer memory 114 is analyzed for respective frames to see if the frame of interest contains a character information image (telop) (step S301). Normally, since a character information image is displayed in white on the screen, whether or not the frame of interest includes a character information image (telop) can be determined by binarizing image data of each frame (white and gray) using a predetermined threshold value for each pixel, and checking the degree of grouping of white component pixels.

A character information image extraction process is then executed (step S302). In this extraction process, for example, row and column histograms associated with white component pixels are generated for a frame that contains a character information image (telop), and detection of a line that includes a character string and extraction of characters are executed based on the histograms.

After that, the extracted characters undergo character recognition, thus converting the character information image into text data indicating an artist name and the like (step S303). Based on the converted text data and the corresponding frame number, the table of contents window which includes the converted text data as an entry, and link information that links each entry to the corresponding frame are generated, and are recorded in the HDD 120 (step S304).

Note that the aforementioned table of contents creation process can also be implemented by analyzing already recorded moving image contents data.

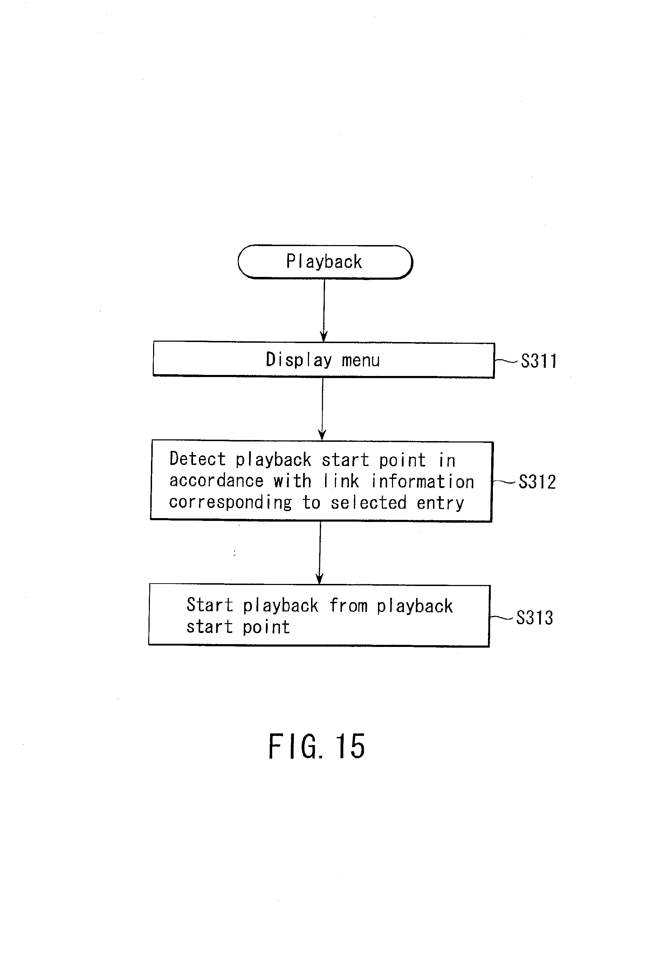

A sequence for starting playback of moving image contents data from a frame position corresponding to a keyword selected on the table of contents window will be described below with reference to the flow chart in FIG. 15.

The table of contents window (menu) corresponding to moving image contents data to be played back is displayed on the screen of the display 12 (step S311). If the user has selected one entry (keyword) on this table of contents window, the frame number corresponding to that selected entry is detected as a playback start point on the basis of the link information (step S312). Playback of the moving image contents data to be played back starts from the frame position of the playback start point (step S313).

In this way, since the table of contents is automatically created by extracting titles (telops) from the contents, the user can play back moving image contents data from a desired position without display of any edit window or user's operations required to create comment messages and the like.

As described above, according to this embodiment, the edit operations required to manage contents data stored in the portable contents recording/playback apparatus 11 can be easily performed without display of any edit window or user's operations required to create comment messages and the like.

Note that the title insert function, simultaneous record & playback function, and table of contents creation function in this embodiment can be appropriately combined and used. The respective edit functions of this embodiment are suitably applied to a portable electronic apparatus that does not allow easy input operations. Also, since input operations for recording/playback apparatuses such as a TV receiver, digital video recorder, audio player, and the like are normally difficult, this embodiment is effective for such home consumer AV apparatuses.

All the aforementioned functions of this embodiment can be implemented as a computer program executable by computer.

## Claims

1. A contents recording/playback apparatus capable of recording and playback of contents data, the apparatus **characterized by** comprising:
a control button (131) configured to issue an insert instruction of contents data to be inserted into contents data whose recording or playback is in progress; and
a data editing unit (111, 119) configured to insert contents data, which is prepared in advance in the apparatus as the contents data to be inserted, in a current recording or playback position of the contents data whose recording or playback is in progress, when the control button (131) is operated while the recording or playback of the contents data is in progress.

2. An apparatus according to claim 1,
**characterized in that** the contents data whose recording or playback is in progress, is moving image contents data, and the contents data which is prepared in advance is image contents data of a moving or still image, and
the data editing unit (111, 119) includes a unit configured to insert the image contents data of the moving or still image, which is prepared in advance, into the moving image contents data as image data, when the control button (131) is operated during recording of the moving image contents data, the image data corresponding to a predetermined number of frames between current and next frame positions of the moving image contents data.

3. An apparatus according to claim 1,
**characterized in that** the contents data whose recording or playback is in progress, is moving image contents data, and the contents data which is prepared in advance is image contents data of a moving or still image,
the data editing unit (111, 119) includes a unit configured to record the image contents data of the moving or still image, which is prepared in advance, in correspondence with the moving image contents data and insert position information, when the control button (131) is operated during recording or playback of the moving image contents data, the insert position information indicating a current frame number corresponding to a current recording or playback position of the moving image contents data and a next frame number, and
the apparatus further comprises a control unit (111, S111, S112, S113, S114) configured to control playback of the moving image contents data and playback of the image contents data of the moving or still image, on the basis of the insert position information, so as to play back the image contents data of the moving or still image between playback frames of the moving image contents data, which are designated by the insert position information.

4. An apparatus according to claim 1,
**characterized by** further comprising:
a detecting unit (117, S301) which detects frames that include character images by analyzing recorded moving image contents data;
an extracting unit (117, S302) which extracts the character images from the detected frames;
a converting unit (118, S303) which converts the extracted character images into text data;
a generating unit (S304) which generates a table of contents window, which includes keyword titles of the detected frames, on the basis of the converted text data and frame numbers of the detected frames; and
a playback unit (111, S311, S312, S313) which starts playback of the moving image contents data from a frame number corresponding to a keyword title selected on the table of contents window.

5. An apparatus according to claim 1,
**characterized by** further comprising:
an imaging device (14) configured to execute a photographing operation; and
a photographing button (132) configured to instruct the imaging device (14) to execute the photographing operation; and
wherein the contents data whose recording or playback which is in progress, is audio contents data, and
the data editing unit (111, 119) includes:
an audio contents editing unit (111, S203) configured to record image contents data of a still or moving image obtained upon execution of the photographing operation in correspondence with time information which indicates an elapsed time from the beginning of recording or playback of the audio contents data, when execution of photographing operation is instructed upon operation of the photographing button (132) during recording or playback of the audio contents data; and
a playback control unit (111, S212, S213, S214) configured to control playback of the recorded image contents data on the basis of the elapsed time from the beginning of playback of the audio contents data and the time information, so as to play back the recorded image contents data at a timing designated by the time information during playback of the audio contents data.

6. An apparatus according to claim 1,
**characterized in that** the contents data whose recording or playback is in progress, is moving image contents data, and the contents data which is prepared in advance is image contents data of a moving or still image, and
the data editing unit (111, 119) includes means for inserting the image contents data of the moving or still image, which is prepared in advance, into the moving image contents data as image data, when the control button (131) is operated during recording of the moving image contents data, the image data corresponding to a predetermined number of frames between current and next frame positions of the moving image contents data.

7. An apparatus according to claim 1,
**characterized in that** the contents data whose recording or playback is in progress, is moving image contents data, and the contents data which is prepared in advance is image contents data of a moving or still image,
the data editing unit (111, 119) includes means for recording the image contents data of the moving or still image, which is prepared in advance, in correspondence with the moving image contents data and insert position information, when the control button (131) is operated during recording or playback of the moving image contents data, the insert position information indicating a current frame number corresponding to a current recording or playback position of the moving image contents data and a next frame number, and
the apparatus further comprises means (111, S111, S112, S113, S114) for controlling playback of the moving image contents data and playback of the image contents data of the moving or still image, on the basis of the insert position information, so as to play back the image contents data of the moving or still image between playback frames of the moving image contents data, which are designated by the insert position information.

8. An apparatus according to claim 1,
**characterized by** further comprising:
means (117, S301) for detecting frames that include character images by analyzing recorded moving image contents data;
means (117, S302) for extracting the character images from the detected frames;
means (118, S303) for converting the extracted character images into text data;
means (S304) for generating a table of contents window, which includes keyword titles of the detected frames, on the basis of the converted text data and frame numbers of the detected frames; and
means (111, S311, S312, S313) for starting playback of the moving image contents data from a frame number corresponding to a keyword title selected on the table of contents window.

9. An apparatus according to claim 1,
**characterized by** further comprising:
an imaging device (14) configured to execute a photographing operation; and
a photographing button (132) configured to instruct the imaging device (14) to execute the photographing operation; and
wherein the contents data whose recording or playback which is in progress, is audio contents data, and
the data editing unit (111, 119) includes:
means (111, S203) for recording image contents data of a still or moving image obtained upon execution of the photographing operation in correspondence with time information which indicates an elapsed time from the beginning of recording or playback of the audio contents data, when execution of photographing operation is instructed upon operation of the photographing button (132) during recording or playback of the audio contents data; and
means (111, S212, S213, S214) for controlling playback of the recorded image contents data on the basis of the elapsed time from the beginning of playback of the audio contents data and the time information, so as to play back the recorded image contents data at a timing designated by the time information during playback of the audio contents data.

10. A contents edit method used in a contents recording/playback apparatus capable of recording and playback of contents data, the method **characterized by** comprising:
executing (S101) recording or playback of contents data; and
inserting (S103) contents data, which is prepared in advance in the apparatus, in a current recording or playback position of the contents data whose recording or playback is in progress, when a specified control button (131) provided to the apparatus is operated during recording or playback of the contents data.

11. A method according to claim 10, **characterized in that** the contents data whose recording or playback is in progress, is moving image contents data, and the contents data which is prepared in advance is image contents data of a moving or still image, and
the inserting (S103) includes inserting the image contents data of the moving or still image, which is prepared in advance, into the moving image contents data as image data, when the control button (131) is operated during recording of the moving image contents data, the image data corresponding to a predetermined number of frames between current and next frame positions of the moving image contents data.

12. A method according to claim 10, **characterized in that** the contents data whose recording or playback is in progress, is moving image contents data, and the contents data which is prepared in advance is image contents data of a moving or still image,
the inserting (S103) includes recording the image contents data of the moving or still image, which is prepared in advance, in correspondence with the moving image contents data and insert position information, when the control button (131) is operated during recording or playback of the moving image contents data, the insert position information indicating a current frame number corresponding to a current recording or playback position of the moving image contents data and a next frame number, and
the method further comprises controlling (S111, S112, S113, S114) playback of the moving image contents data and playback of the image contents data of the moving or still image, on the basis of the insert position information, so as to play back the image contents data of the moving or still image between playback frames of the moving image contents data, which are designated by the insert position information.

13. A method according to claim 10, **characterized by** further comprising:
detecting (S301) frames that include character images by analyzing recorded moving image contents data;
extracting (S302) the character images from the detected frames;
converting (S303) the extracted character images into text data;
generating (S304) a table of contents window, which includes keyword titles of the detected frames, on the basis of the converted text data and frame numbers of the detected frames; and
starting (S311, S312, S313) playback of the moving image contents data from a frame number corresponding to a keyword title selected on the table of contents window.

14. A method according to claim 10, **characterized in that** the contents data whose recording or playback is in progress, is audio contents data, and
the inserting (S103) includes:
recording (S203) image contents data of a still or moving image obtained upon execution of a photographing operation of an imaging device (14) provided to the apparatus in correspondence with time information which indicates an elapsed time from the beginning of recording or playback of the audio contents data, when execution of a photographing operation is instructed upon operation of a photographing button (132) provided to the apparatus during recording or playback of the audio contents data; and
controlling (S212, S213, S214) playback of the recorded image contents data on the basis of the elapsed time from the beginning of playback of the audio contents data and the time information so as to play back the recorded image contents data at a timing designated by the time information during playback of the audio contents data.
